# EUROPÄISCHE PATENTSCHRIFT

(11) **EP 1 314 971 B1**
(45) Veröffentlichungstag und Bekanntmachung des Hinweises auf die Patenterteilung: **27.04.2005**
(21) Anmeldenummer: 02024638.5
(22) Anmeldetag: 05.11.2002
(51) Int. Cl.: G01N 21/03, G01N 21/05, G01N 21/61, H01S 3/08

(54) **Gasprobenbehälter für einen Gasanalysator**
Gas sample container for a gas analyser
Récipient d'échantillons gazeux pour analyseur de gaz

(30) Priorität: 22.11.2001 DE 10157275
(43) Veröffentlichungstag der Anmeldung: 28.05.2003
(73) Patentinhaber: CARL ZEISS JENA GmbH, 07745 Jena (DE)
(72) Erfinder: Kerstan, Felix, Dr., 07747 Jena (DE); Hoyme, Werner, 07745 Jena (DE); Correns, Nico, 99425 Weimar (DE); Klarner, Ullrich, 07751 Jenapriessnitz (DE)
(74) Vertreter: Muhsfeldt, Willi

(56) Entgegenhaltungen:
- EP-A- 0 596 605
- DE-A- 3 151 228
- DE-A- 3 236 915
- DE-A- 3 622 907
- DE-A- 19 848 120
- DE-B- 2 937 352

## Beschreibung

Die Erfindung bezieht sich auf einen Gasprobenbehälter für einen Gasanalysator, umfassend ein einen zylindrischen Resonanzhohlraum umschließendes Gehäuse, an dem zwei den Resonanzhohlraum begrenzende Spiegel zur Ein- und Rückkopplung des von einer Beleuchtungsquelle ausgehenden Meßlichtes befestigt sind.

Zur Bestimmung von Eigenschaften eines Gases werden Meßeinrichtungen verwendet, die als Gasanalysatoren bezeichnet werden. Häufig besitzen Gasanalysatoren einen sogenannten Hohlraumresonator, der eine Gasprobe aufnimmt und in den ein Lichtstrahl definiert eingekoppelt wird. Die Ausbreitung des Lichtes innerhalb des Hohlraumes wird in Abhängigkeit von den Eigenschaften des Gases beeinflußt. Dieser Einfluß wird bewertet (Intra-Cavity-Gasanalyse).

Bekannt sind Resonatoren mit zylindrischen Hohlräumen, die an den beiden Enden ihrer Längsausdehnungsrichtung durch angesetzte Spiegel mit sphärisch gekrümmten Spiegelflächen begrenzt sind. Bei der Herstellung solcher Resonatoren besteht ein stets wiederkehrendes Problem darin, die Spiegel so zu justieren, daß die reflektierte Strahlung genau in die Mittenachse des zylindrischen Hohlraumes gerichtet ist.

Derartige Gasanalysatoren sind in US 5,432,610 und US 5,450,193 beschrieben. Diese Gasanalysatoren weisen _{P}robenräume auf, die aus einem mit verspiegelter Innenwandung versehenen Rohrstück gebildet sind, das an beiden Enden mit in ihrer Lage justierbaren Spiegeln begrenzt ist. Durch einen dieser Spiegel, den Einkoppelspiegel, gelangt der von einer Laserlichtquelle kommende Meßlichtstrahl in das Innere des Gasprobenraumes.

Der eingekoppelte Laserstrahl verläuft dabei in der Mittenachse des Gasprobenraumes und es ist erforderlich, die Spiegel so zu justieren, daß ihre Brennpunkte in der Mittenachse liegen.

Während der Justierung bedarf es zusätzlicher Hilfsvorrichtungen zum Bewegen und Halten der einzelnen Elemente, da sowohl der Einkoppel- als auch der gegenüberliegende Endspiegel zur exakten Ausrichtung in mehreren Freiheitsgraden relativ zum Rohrstück bewegt und schließlich in der korrekten Position bis zur Fixierung gehalten werden müssen.

In der DE 198 48 120 C2 wird eine Einrichtung zur Messung der strahlungsabsoription von Gasen beschrieben. Dabei besteht die erforderliche Absorptionszelle aus einer einfachen zylindrischen Messküvette, deren Eintritts- und Austrittsfenster als teildurchlässige Spiegel ausgebildet sind. Die plankonkav ausgestalteten Spiegel sind so angeordnet, dass die konkave Seite zum Zelleninneren weist. Das Wesen dieser Erfindung besteht in der Anordnung der beiden Spielgel mit einem Abstand der dem Krümmungsradius entspricht. Mit dieser Anordnung wird eine Absorptionszelle mit großer effektiver optischer Absorptionsweglänge realisiert, die zudem eine einfache bauliche Gestalt aufweist. Aussagen zur Verbindung der Spiegel mit der Messküvette bzw. über die Form der Stirnflächen der Messküvette sind nicht gemacht.

Diese Lösung gemäß DE 31 51 228 C2 betrifft einen optischen Resonator für einen Laser mit zwei einander gegenüberstehenden Resonatorspiegeln und einem dazwischen angeordneten blockförmigen, glaskeramische Trägers zur Aufnahme des Lasermediums. Der vorgeschlagene Resonator soll bei einem möglichst unkomplizierten Aufbau und einer hohen thermischen stabilität die einfache Unterbringung weiterer Zubehörteile ermöglichen. Sowohl die stirnflächen des Trägers als auch die Spiegelflächen der Resonatorspiegel sind geschliffen und optisch poliert. In einer Ausgestaltungsvariante weist eine Stirnflächen des Trägers einen sphärischen Schliff mit optischer Politur auf, die als Auflagefläche für einen konkaven Resonatorspiegel mit gleichem Krümmungsradius dient. Bei gleichen Krümmungsradien von Spiegel und Gehäuse sind die Anforderungen an die Toleranzen der Bauteile sehr hoch und technologisch kaum realisierbar.

Davon ausgehend liegt der Erfindung die Aufgabe zugrunde, den Aufwand für die Justierung der Spiegel bei der Herstellung solcher Gasprobenbehälter zu verringern.

Erfindungsgemäß sind bei einem Gasprobenbehälter der eingangs beschriebenen Art die Spiegel an ihren dem Gehäuse zugewandten Flächen kugelförmig konkav gekrümmt und das Gehäuse ist an seinen den Spiegeln zugewandten Flächen konvex gekrümmt, wobei die Krümmungsmittelpunkte jeweils in der Mittenachse des zylindrischen Resonanzhohlraumes liegen und die Spiegelflächen der Spiegel Abschnitte der dem Gehäuse zugewandten konkav gekrümmten Flächen sind. Die kugelförmige Ausbildung der aneinandergrenzenden Flächen an den Spiegeln und am Gehäuse bewirkt, daß bereits im Augenblick des Ansetzens der Spiegel an das Gehäuse selbständig eine Justierung dahingehend stattfindet, daß die Krümmungsmittelpunkte der Spiegelflächen in der Längs- bzw. Mittenachse des zylindrischen Hohlraumes und damit wie erforderlich im Strahlengang des Meßlichtes liegen. Ein weiteres Ausrichten ist nicht notwendig. Die Spiegel müssen nur noch, etwa mittels Kleber, in ihrer Lage fixiert werden.

Der am Gehäuse vorgesehene Krümmungsradius ist um einen geringen Betrag größer ausgeführt als der jeweils zugeordnete Krümmungsradius an den Spiegelflächen. Damit wird erreicht, daß die gekrümmten Spiegelflächen mit einem ringförmigen äußeren Rand auf der zugeordneten, ebenfalls gekrümmten Gehäusefläche aufliegen und die Spiegel dadurch eine stabile Lage relativ zum Gehäuse haben. Wäre dagegen der Krümmungsradius der Spiegelfläche größer als der zugeordnete Krümmungsradius am Gehäuse, würde sich eine Punktauflage des Spiegels ergeben und es bestünde die Gefahr des Verkippens, bevor eine Fixierung erfolgt ist. Das aber soll vermieden werden.

Es werden also gegenüber dem Stand der Technik keine zusätzlichen Hilfsvorrichtungen und Verschiebebewegungen mehr benötigt, um die Spiegel zu justieren.

Beispielsweise wird bei der Montage zunächst der Spiegel angesetzt und fixiert, durch den das Meßlicht eingekoppelt wird. Dann wird der gegenüberliegende Spiegel befestigt und der Hohlraum relativ zum Strahlengang des Meßlichtes ausgerichtet.

Zum Zwecke des Ein- und Austritts der Gasprobe ist der Resonanzhohlraum im Bereich zwischen den beiden Spiegeln mit einem Gaseinlaß- und einem Gasauslaßstutzen versehen, die beide senkrecht zur Mittenachse ausgerichtet sein können.

Bevorzugt ist das Gehäuse einstückig aus einer transparenten Röhre, bevorzugt einer Quarzglasröhre, mit einer hochreflektierenden Mantelfläche gebildet.

Eine alternative Ausgestaltung besteht darin, daß das Gehäuse mehrstückig aus einer transparenten Röhre, bevorzugt einer hochreflektierenden Quarzglasröhre, und einer Edelstahlhülle an deren Mantelfläche gebildet ist.

Davon erweist sich die erstere Variante als günstiger, da die Verspiegelung der Mantelfläche weniger Kosten verursacht als das Herstellen und Einbringen einer hochreflektierenden Hülle in das Innere des Gehäuses.

Darüberhinaus ergibt sich eine bevorzugte Variante der erfindungsgemäßen Anordnung, wenn die Beleuchtungsquelle unmittelbar mit dem Einkoppelspiegel verbunden ist. Dadurch kann eine Dejustierungen des Laserstrahls während der Meßwerterfassung, beispielsweise durch Erschütterungen, nahezu vermieden werden. Ferner bietet diese Anordnung die Möglichkeit des universellen Einsatzes an verschiedenen Meßplätzen ohne erneute Justierung der einzelnen Elemente.

Zum Zwecke der Abdichtung und Fixierung der Spiegel am Gehäuse sind Fasen zur Ausbildung von Klebespalten angearbeitet. Durch vollständiges Ausfüllen der Klebespalten mit einem Optikkleber wird ein unerwünschtes Austreten der Probe aus dem Resonanzhohlraum verhindert und auch vermieden, daß die Probe zwischen den Spiegelsystemen und dem Resonanzhohlraum in sogenannte "Toträume" entweichen kann und so gegebenenfalls Meßwertverfälschungen verursacht.

Da die Spiegel mit dem Gehäuse des Resonanzhohlraumes fest zu einer Baugruppe verbunden sind, bedarf es keiner zusätzlichen Aufnahmen und Halterungen, um die einzelnen Elemente während des Meßvorganges in ihrer justierten Lage zu fixieren.

Anhand eines nachstehend dargelegten Ausführungsbeispiels soll der erfindungsgemäße Gasprobenbehälter näher erläutert werden. Die zugehörigen Zeichnungen zeigen in
- Fig.1: ein aus Quarzglas bestehendes zylindrisches Gehäuse 1, das den zur Aufnahme einer Gasprobe dienenden Resonanzhohlraum 2 mit der Mittenachse A aufweist.
- Fig.2: eine vergrößerte Darstellung der Anlage einer Spiegelfläche an einer zugeordneten Gehäusefläche.

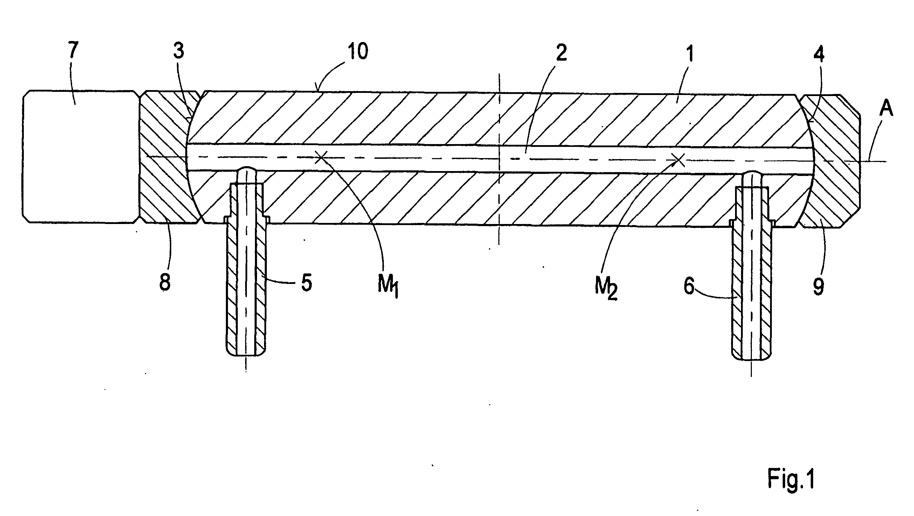

In Fig.1 ist zu erkennen, daß an beide Enden des Resonanzhohlraumes 2 Flächen 3, 4 angeformt sind, die kugelförmig konvex gekrümmt sind. Die Krümmungsmittelpunkte M1 und M2 liegen dabei in der Mittenachse A.

Senkrecht zur Mittenachse A sind im Gehäuse 1 ein Gaseinlaßstutzen 5 und ein Gasaustrittsstutzen 6 fest angebracht.

Zum Zwecke des Eintritts des von einem Laser 7 ausgehenden Meßlichtstrahles in den Resonanzhohlraum sowie zur Rückkopplung der Strahlung sind an die Flächen 3, 4 des Gehäuses 1 Spiegel 8 und 9 angesetzt, wobei in diesem Fall beispielhaft der Spiegel 8 mit dem Laser 7 unmittelbar verbunden ist.

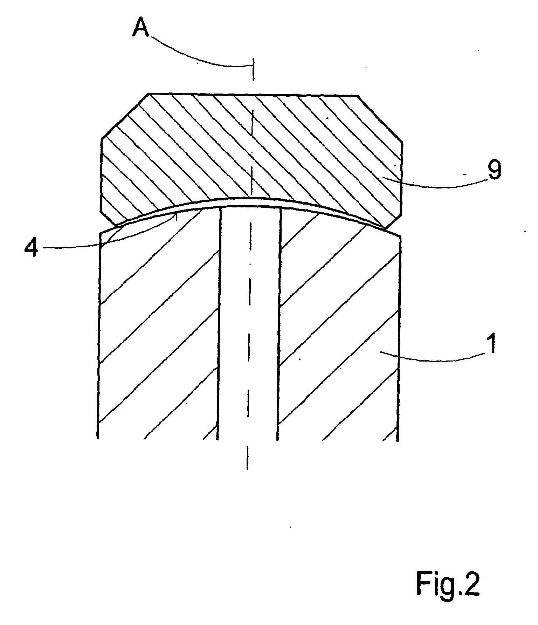

Die Spiegel 8, 9 sind an ihren dem Gehäuse 1 zugewandten Flächen ebenfalls kugelförmig, jedoch konkav gekrümmt. Die Krümmungsradien der Spiegel 8, 9 sind dabei etwas kleiner bemessen als die Krümmungsradien der Flächen 3, 4, wodurch sich die in Fig.2 vergrößert dargestellte Anlage einer gekrümmten Spiegelfläche an die ebenfalls gekrümmte Gehäusefläche ergibt. Auf diese Weise liegen die Krümmungsmittelpunkte der angesetzten Spiegel 8, 9 ebenso wie die Krümmungsmittelpunkte M1, M2 in der Mittenachse A.

Der Vorteil, der sich daraus ergibt, daß der an der Spiegelfläche vorgesehene Krümmungsradius um einen geringen Betrag kleiner ausgeführt als der jeweils zugeordnete Krümmungsradius am Gehäuse 1 besteht darin, daß die gekrümmten Spiegelflächen mit einem ringförmigen äußeren Rand auf der zugeordneten, ebenfalls gekrümmten Gehäusefläche 3, 4 aufliegen und die Spiegel dadurch eine stabile Lage relativ zum Gehäuse haben. So wird vorbeugend auch der Fall vermieden, daß der Gehäuseradius aufgrund von Fertigungstoleranzen kleiner als der Spiegelradius ist und dadurch der Spiegel bei der Montage eine instabile Lage einnimmt.

Bei der Montage wird beispielhaft zunächst der zur Einkopplung des Meßlichtstrahles dienende Spiegel 8 auf die kugelförmig ausgebildete Fläche 3 des Gehäuses 1 aufgesetzt und mittels einer Klebsubstanz fixiert. Es bedarf keiner zusätzlichen Hilfsmittel um zu erreichen, daß der Krümmungsmittelpunkt M1 in der Mittenachse A liegt.

Zunächst wird der Spiegel 9 auf die Fläche 4 aufgesetzt und dort fixiert und auch die Baugruppe aus Laser 7 und Spiegel 8 gefertigt. Dann wird die Baugruppe aus Laser 7 und Spiegel 8 auf die Fläche 3 aufgesetzt und fixiert.

Durch die Gestaltung der Grenzflächen zwischen den Spiegeln 8, 9 und dem Gehäuse 1 erübrigen sich wie bereits dargelegt aufwendige Justiermaßnahmen zur Lagepositionierung der Spiegel 8, 9.

Die Umfangsfläche 10 des Gehäuses 1 ist vorteilhafterweise mit einer nach innen reflektierenden Spiegelschicht versehen.

## Patentansprüche

1. Gasprobenbehälter für einen Gasanalysator, umfassend ein einen zylindrischen Resonanzhohlraum (2) umschließendes Gehäuse (1), an dem zwei den Resonanzhohlraum (2) begrenzende Spiegel (8, 9) zur Ein- und Rückkopplung des von einer Beleuchtungsquelle ausgehenden Lichtes befestigt sind, **dadurch gekennzeichnet, daß**
- die Spiegel (8, 9) an ihren dem Gehäuse (1) zugewandten Flächen kugelförmig konkav gekrümmt sind und
- das Gehäuse (1) an seinen den Spiegeln (8, 9) zugewandten Flächen (3, 4) konvex gekrümmt ist,
- daß die Krümmungsradien der Spiegel (8, 9) um einen vorgegebenen Betrag kleiner sind als die Krümmungsradien der jeweils zugeordneten Flächen (3, 4),
- wobei die Krümmungsmittelpunkte jeweils in der Mittenachse (A) des zylindrischen Resonanzhohlraumes (2) liegen und die Spiegelflächen der Spiegel (8, 9) Abschnitte der dem Gehäuse (1) zugewandten konkav gekrümmten Flächen sind.

2. Gasprobenbehälter nach Anspruch 1, **dadurch gekennzeichnet, daß** das Gehäuse (1) einstückig aus einer transparenten Röhre, bevorzugt einer Quarzglasröhre, mit einer hochreflektierenden Mantelfläche gebildet ist.

3. Gasprobenbehälter nach Anspruch 1, **dadurch gekennzeichnet, daß** das Gehäuse (1) mehrstückig aus einer transparenten Röhre, bevorzugt einer Quarzglasröhre, und einer hochreflektierenden Edelstahlhülle an deren Mantelfläche gebildet ist.

## Claims

1. Gas sample container for a gas analyser, comprising a housing (1) surrounding a cylindrical resonant cavity (2), two mirrors (8, 9) defining the resonant cavity (2) being attached to the housing for feeding in and feeding back the light emitted from an illumination source, **characterised in that**
- the surfaces of the mirrors (8, 9) facing the housing (1) are curved in a spherically concave manner and
- the surfaces (3, 4) of the housing (1) facing the mirrors (8, 9) are curved in a convex manner,
- **in that** the radii of curvature of the mirrors (8, 9) are smaller than the radii of curvature of the respectively allocated surfaces (3, 4) by a predetermined amount,
- wherein the centres of curvature are located in each case in the central axis (A) of the cylindrical resonant cavity (2) and the reflecting surfaces of the mirrors (8, 9) are sections of the concavely curved surfaces facing the housing (1).

2. Gas sample container as claimed in Claim 1, **characterised in that** the housing (1) is formed in one piece from a transparent tube, in a preferred manner from a fused quartz tube, having a highly reflective peripheral surface.

3. Gas sample container as claimed in Claim 1, **characterised in that** the housing (1) is formed in several pieces from a transparent tube, in a preferred manner from a fused quartz tube, and a highly reflective special steel casing on the peripheral surface thereof.

## Revendications

1. Récipient d'échantillons gazeux pour un analyseur de gaz, comprenant un boîtier (1) entourant un espace creux de résonance cylindrique (2), auquel sont fixés deux miroirs (8, 9) délimitant l'espace creux de résonance (2) pour l'injection et la réinjection de la lumière partant d'une source d'éclairage, **caractérisé en ce que**
- les miroirs (8, 9) sont courbés d'une manière sphérique concave à leurs faces orientées vers le boîtier (1) et
- le boîtier (1) est courbé d'une manière convexe à ses faces (3, 4) orientées vers le miroir (8, 9),
- **en ce que** les rayons de courbure des miroirs (8, 9) sont plus petits d'une valeur prédéterminée que les rayons de courbure des faces (3, 4) respectivement associées,
- où les centres de courbure se situent à chaque fois dans l'axe médian (A) de l'espace creux de résonance cylindrique (2) et les faces des miroirs (8, 9) sont des sections des faces courbées d'une manière concave orientées vers le boîtier (1).

2. Récipient d'échantillons gazeux selon la revendication 1, **caractérisé en ce que** le boîtier est réalisé en une pièce à partir d'un tube transparent, de préférence un tube en verre quartzeux, avec une face d'enveloppe hautement réfléchissante.

3. Récipient d'échantillons gazeux selon la revendication 1, **caractérisé en ce que** le boîtier (1) est réalisé en plusieurs pièces à partir d'un tube transparent, de préférence d'un tube en verre quartzeux et d'une enveloppe en acier fin hautement réfléchissante à sa face d'enveloppe.
